(19) Europäisches Patentamt
European Patent Office
Office européen des brevets

(11) **EP 4 195 497 A1**

(12) **EUROPEAN PATENT APPLICATION**

(43) Date of publication:
**14.06.2023  Bulletin 2023/24**

(51) International Patent Classification (IPC):
***H02P 27/08*** (2006.01)

(21) Application number: **22212033.9**

(22) Date of filing: **07.12.2022**

(52) Cooperative Patent Classification (CPC):
**H02P 27/08;** H02P 2209/09; H02P 2209/13

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021  GB 202117653**

(71) Applicant: **Nissan Motor Manufacturing (UK)
Limited
Cranfield, Bedfordshire MK43 0DB (GB)**

(72) Inventors:
• **Riedemann, Javier
  S1 3JD Sheffield (GB)**
• **Zhu, Zi-Qiang
  S1 3JD Sheffield (GB)**

(54) **CONTROLLING A VOLTAGE SOURCE INVERTER TO MODULATE AN OUTPUT VOLTAGE**

(57) The invention relates to controlling a two-level, three-phase voltage source inverter to modulate an output voltage. The active switching states of the inverter are represented on a reference plane with a voltage reference vector defining an angle indicative of the output voltage phase. The invention includes defining a required output voltage magnitude, and determining a modulation index value based on the required magnitude relative to a maximum output voltage magnitude of the inverter. A modulation strategy defines a switching sequence for switching between active and zero switching states of the inverter as the reference voltage vector rotates about the reference plane, and the inverter is controlled in accordance with the modulation strategy. Determining the modulation strategy includes determining an active rotation angle of the reference voltage vector, based on the modulation index value, through which the voltage source inverter is operated in each of the active switching states during a fundamental cycle of the output voltage.

Figure 4

**Description**

TECHNICAL FIELD

The present invention relates to controlling a voltage source inverter to modulate an output voltage. In particular, the present invention determines a modulation strategy for switching between active and zero switching states of the inverter as a reference voltage vector rotates about a reference polar coordinate plane, where determining the modulation strategy comprises determining an active rotation angle of the reference voltage vector through which the voltage source inverter is operated in each of the active switching states during a fundamental cycle of the output voltage.

BACKGROUND

A voltage source inverter (VSI) is a device or converter that converts its voltage from DC (direct current) to AC (alternating current) form. A two-level, three-phase VSI is a commonly used power electronic converter for the control of electrical drives or motors, and includes three pairs of semiconductor switches. Typically, a modulation strategy is used to control the semiconductor switches to perform the voltage conversion from DC to AC.

One known modulation strategy is six-step modulation, which allows for control of the frequency and phase of the output voltage of the VSI. However, six-step modulation is disadvantageous in that it does not allow for controlling the magnitude of the VSI output voltage.

Another known modulation strategy is pulse width modulation (PWM), which allows for control of the magnitude of the output voltage in addition to the frequency and phase. When using a PWM strategy, VSIs are typically operated in a so-called 'linear modulation region' where the maximum output voltage is limited and varies with the chosen PWM technique.

If a higher output voltage is required, a so-called 'overmodulation strategy' is needed to increase the voltage transfer ratio of the VSI under a fixed DC supply voltage. This overmodulation strategy is used to perform a transition from a PWM technique in the linear modulation region to a different technique, e.g. six-step modulation, that generates the maximum possible inverter output voltage.

Some known overmodulation strategies are disadvantageous in that they can cause relatively significant harmonic distortion in the generated voltage. Other known methods, that attempt to generate voltage with lower harmonic distortion, suffer from being relatively complex to implement. In addition, it is known that issues of harmonic distortion are of increased concern in cases in which a ratio of the switching frequency of the VSI to the fundamental frequency of the reference signal or output voltage is below a certain threshold, e.g. 15.

There is therefore a need for a VSI modulation strategy that is relatively simple to implement and guards against significant harmonic distortion in the output voltage, that is capable of operation at low switching-to-fundamental frequency ratios of the VSI.

It is against this background to which the present invention is set.

SUMMARY OF THE INVENTION

According to an aspect of the invention there is provided a method of controlling a voltage source inverter to modulate an output voltage or reference voltage of the inverter. The voltage source inverter comprises three phase legs each comprising a pair of inverter switches, the inverter switches being operable to provide six active switching states and two zero switching states of the inverter. The six active switching states are represented as respective active vectors equally spaced about a pole of a polar coordinate plane (reference plane), and a voltage reference vector is represented in the polar coordinate plane and defines an angle indicative of a phase of the output voltage.

The method comprises defining a required magnitude of the output voltage. The method comprises determining a modulation index value based on the required magnitude of the output voltage relative to a maximum output voltage magnitude of the voltage source inverter. The method comprises determining a modulation strategy for operating the voltage source inverter, where the modulation strategy defines a switching sequence for switching between the active and zero switching states of the inverter as the reference voltage vector rotates about the pole of the polar coordinate plane. The method comprises controlling the voltage source inverter in accordance with the modulation strategy to modulate the output voltage. Determining the modulation strategy comprises determining an active rotation angle of the reference voltage vector through which the voltage source inverter is operated in each of the active switching states during a fundamental cycle of the output voltage. The rotation angle is determined in dependence on the modulation index value.

The maximum output voltage magnitude may be a peak value of a maximum fundamental voltage of the voltage source inverter.

The modulation index value $m$ may be determined according to:

$$m = \frac{\hat{V}_{ref}}{\frac{2}{\pi} V_{DC}}$$

where $\hat{V}_{ref}$ is the required magnitude of the output voltage, and $(2/\pi)V_{DC}$ is the peak value of the maximum fundamental voltage.

The active rotation angle for operating the voltage source inverter in each of the active switching states may be determined according to a linear relationship between the active rotation angle and the modulation index value.

The active rotation angle $\theta_{act}$ may be determined according to:

$$\theta_{act} = m\frac{\pi}{3}$$

where m is the modulation index value.

Determining the modulation strategy may comprise determining a zero rotation angle of the reference voltage vector through which the voltage source inverter is operated in the zero switching states. The zero rotation angle may be determined based on the active rotation angle.

The zero rotation angle $\theta_{zero}$ may be determined according to:

$$\theta_{zero} = \frac{\pi}{3} - \theta_{act} = (1 - m)\frac{\pi}{3}$$

The defined switching sequence may comprise a repeated pattern of switching from one of the zero switching states to one of the active switching states to a further one of the active switching states.

The further one of the active switching states may corresponds to the active vector ahead of the active vector corresponding to said one of the zero switching states according to a direction of rotation of the reference voltage vector in the polar coordinate plane.

The defined switching sequence may comprise operating the voltage source inverter in each of the six active switching states twice during the fundamental cycle.

The same active switching state may be operated before and after each instance of the inverter being operated in one of the zero switching states.

For each of the six active switching states, the method may comprise operating the inverter in the respective active switching state for half of the active rotation angle for each of the two instances in which the active switching state is operated during the fundamental cycle.

The defined switching sequence may include both of the two zero switching states.

The defined switching sequence may be:

$V_0$ - $V_1$ - $V_2$ - $V_7$ - $V_2$ - $V_3$ - $V_0$ - $V_3$ - $V_4$ - $V_7$ - $V_4$ - $V_5$ - $V_0$ - $V_5$ - $V_6$ - $V_0$ - $V_6$ - $V_1$

where $V_0$, $V_7$ are zero vectors of the polar coordinate plane, representing the zero switching states, and $V_1$ - $V_6$ are the active switching states.

One rotation of the reference voltage vector about the pole of the polar coordinate plane may correspond to the fundamental frequency of the output voltage. The method may be performed if a ratio between a switching frequency of the voltage source inverter and the fundamental frequency is below a prescribed threshold value.

According to another aspect of the present invention there is provide a method of controlling a voltage source inverter to modulate an output voltage of the inverter. The voltage source inverter comprises three phase legs each comprising a pair of inverter switches, the inverter switches being operable to provide six active switching states and two zero switching states of the inverter. The method comprises defining a required magnitude of the output voltage. The method comprises determining a modulation index value based on the required magnitude of the output voltage relative to a maximum output voltage magnitude of the voltage source inverter. The method comprises determining a modulation strategy for operating the voltage source inverter, the modulation strategy defining a switching sequence for switching between the active switching states and at least one of the zero switching states of the inverter during a fundamental cycle of the output voltage. The method comprises controlling the voltage source inverter in accordance with the modulation strategy to modulate the output voltage. Determining the modulation strategy comprises determining an active time period for operating the voltage source inverter in each of the active switching states during the fundamental cycle. The active time period is determined in dependence on the modulation index value.

The maximum output voltage magnitude may be a peak value of a maximum fundamental voltage of the voltage source inverter.

The modulation index value m may be determined according to:

$$m = \frac{\hat{V}_{ref}}{\frac{2}{\pi}V_{DC}}$$

where $\hat{V}_{ref}$ is the required magnitude of the output voltage, and $(2/\pi)V_{DC}$ is the peak value of the maximum fundamental voltage.

The active time period for operating the voltage source inverter in each of the active switching states may be determined according to a linear relationship between the active time period and the modulation index value.

The active time period $t_{act}$ may be determined according to:

$$t_{act} = \frac{m\pi}{3\omega_1}$$

where $\omega_1$ is a fundamental frequency of the output voltage in radians per second, and m is the modulation index value.

Determining the modulation strategy may comprise determining a zero time period for operating the voltage source inverter in the at least one zero switching state of the switching sequence. The zero time period may be determined in dependence on the active time period.

The zero time period $t_{zero}$ may be determined according to:

$$t_{zero} = \frac{\pi(1 - m)}{3\omega_1}$$

According to another aspect of the present invention there is provided a controller for controlling a voltage source inverter to perform a method as defined above.

According to another aspect of the present invention there is provided a non-transitory, computer-readable storage medium storing instructions thereon that when accessed by one or more processors cause the one or more processors to perform a method as defined above.

BRIEF DESCRIPTION OF THE DRAWINGS

Examples of the invention will now be described with reference to the accompanying drawings, in which:

Figure 1 schematically illustrates a voltage source inverter and a controller for controlling the voltage source inverter in accordance with an example of the invention;

Figure 2 illustrates a polar coordinate plane with six active vectors, equally spaced about a pole of the plane, representing active switching states of the voltage source inverter of Figure 1, and representing a voltage reference vector indicative of a reference voltage of the voltage source inverter of Figure 1.

Figure 3 illustrates an example when the voltage reference vector of Figure 2 is in an overmodulation region;

Figure 4 illustrates steps of a method performed by the controller of Figure 1 in accordance with an example of the invention;

Figures 5(a) and 5(b) illustrate switching sequences of switches of the voltage source inverter of Figure 1; in particular, Figure 5(a) illustrates a switching sequence according to a previous modulation strategy, and Figure 5(b) illustrates a switching sequence according to a modulation strategy in accordance with the method of Figure 4;

Figures 6(a), 6(b) and 6(c) illustrate waveforms of an output voltage when the voltage source inverter of Figure 1 is controlled in accordance with the method of Figure 4 for different values of a modulation index value indicative of a required magnitude of the output voltage;

Figure 7 illustrates an output phase voltage when the voltage source inverter of Figure 1 is controlled in accordance with the method of Figure 4;

Figure 8 illustrates a voltage gain as a function of the modulation index value when the voltage source inverter of Figure 1 is controlled in accordance with the method of Figure 4;

Figure 9 illustrates harmonics of the output voltage of the voltage source inverter of Figure 1 as a function of the modulation index value;

Figure 10 illustrates results of a simulation when the voltage source inverter of Figure 1 is controlled according to a previous modulation strategy.

Figures 11 to 14 show plots illustrating results of a simulation performed in accordance with the method of Figure 4;

Figure 15 schematically illustrates a control scheme for performing another simulation in accordance with the method of Figure 4;

Figures 16 to 23 show plots illustrating results of the simulation of Figure 15; and,

Figures 24 to 27 show plots illustrating results of experiments performed in accordance with the method of Figure 4.

DETAILED DESCRIPTION

The present invention relates to modulation techniques, strategies, or methods for power electronics circuits. Modulation strategies are strategies for controlling the state of the semiconductor switches in these circuits. Two-level, three-phase voltage source inverters are the typical power electronic converters used in the control of electrical drives.

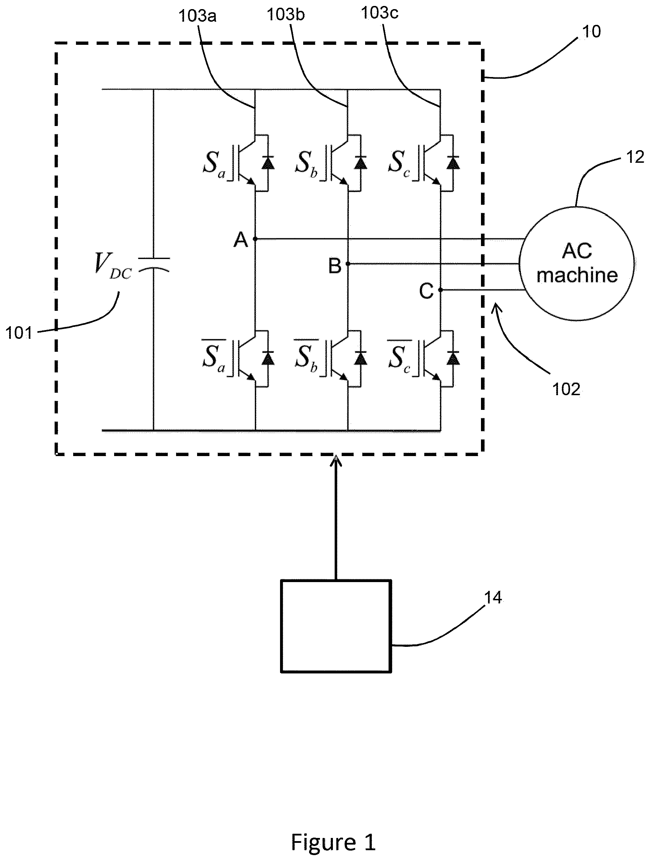

Figure 1 illustrates an example of a two-level, three-phase voltage source inverter (VSI) 10. The VSI 10 is for converting its voltage from a DC (direct current) supply 101 to a balanced three-phase AC (alternating current) at its output 102. In particular, the VSI 10 synthesises a reference voltage to be provided to an AC machine (electric motor or drive) 12. The VSI 10 includes three pairs of switches ($S_a$, $\overline{S_a}$), ($S_b$, $\overline{S_b}$), ($S_c$, $\overline{S_c}$) arranged in parallel. Each pair of switches arranged between the positive DC bus and negative DC bus represents a phase leg 103a, 103b, 103c. The output terminal A, B, C is the midpoint of the two switches in each pair. Only one switch of a phase leg 103a, 103b, 103c may be turned on at any given time to prevent a short circuit between the DC buses.

One state (ON) of each phase leg 103a, 103b, 103c is the case in which the upper switch $S_a, S_b, S_c$ is turned on, and the other state (OFF) is the case in which the lower switch $\overline{S_a}, \overline{S_b}, \overline{S_c}$ is turned on. The VSI 10 therefore has $2^3=8$ possible switching states. Six of these states are active states, whereas the two states in which either all of the upper switches or all of the lower switches are turned on are referred to as zero states. The line-to-line output voltage is zero in the zero states.

Figure 1 also shows a controller 14 for controlling the operation of the VSI 10 - in particular, the states of the switches - in accordance with one or more modulation strategies for synthesising a desired voltage to be output to the AC machine 12, i.e. for modulating an output voltage of the VSI 10. The controller 14 may be in the form of any suitable computing device, for instance one or more functional units or modules implemented on one or more computer processors. Such functional units may be provided by suitable software running on any suitable computing substrate using conventional or customer processors and memory. The one or more functional units may use a common computing substrate (for example, they may run on the same server) or separate substrates, or one or both may themselves be distributed between multiple computing devices. A computer memory may store instructions for performing the methods to be performed by the controller, and the processor(s) may execute the stored instructions to perform the methods.

One known modulation strategy for controlling an inverter such as the VSI 10 is so-called 'six-step modulation', which allows for control of the frequency and phase of the output voltage of the VSI. Six-step modulation uses a sequence of six switching patterns or states for the three phase legs of the VSI to generate a full cycle of three phase voltages (during a fundamental cycle of the output voltage).

Space Vector Modulation (SVM) is another known modulation strategy - in particular, a Pulse Width Modulation (PWM) strategy - for modulating three-phase inverters such as the VSI 10. SVM involves synthesising a reference voltage by switching between the active and zero switching states, and the magnitude of the output voltage can be controlled in addition to the frequency and phase.

When using a PWM strategy, VSIs are typically operated in a so-called 'linear modulation region' where the maximum output voltage is limited and varies with the chosen PWM technique. If a higher voltage is required, a so-called 'overmodulation strategy' is needed to increase the voltage transfer ratio of the VSI under a fixed DC supply voltage. This overmodulation technique is used to perform a transition from the linear region to another technique, such as six-step modulation, in an overmodulation region which generates the maximum possible inverter output voltage.

In general, existing overmodulation methods may be divided into single-mode strategies and dual-mode strategies. In a single-mode strategy, the phase of the reference voltage is modified and held to be a certain phase when overmodulation is needed. In a dual-mode strategy, the overmodulation region is divided into two parts. In a first overmodulation region, only the amplitude of the reference voltage is changed. In a second overmodulation region, both the amplitude and phase angle of the reference voltage are changed. The aim is to generate a voltage with lower harmonic distortion than the single-mode approach; however, the implementation complexity is higher.

Also, it is generally accepted that a ratio of switching frequency $f_s$ to fundamental frequency $f_1$ of a reference signal output voltage of a VSI should be greater than a certain threshold. For instance, the ratio $m_f = f_s/f_1 > 15$ may be needed to maintain voltage waveform quality. Below this value, low-order harmonics may increase, and a problem known as beat phenomenon, consisting of low-frequency current fluctuations that could lead to large torque pulsations, may appear.

Some approaches for addressing this issue are known. In one such approach, a carrier-based modulation strategy is used, and is based on modifying the reference voltages by averaging them over a switching period. While this approach may be relatively simple to implement, for very low values of the ratio $m_f$ (e.g. less than 8), this approach may result in voltage imbalance and/or a reduction in the voltage magnitude. In a different approach, the strategy consists of the modulation of two phases while the third one remains clamped during a switching period. This strategy aims to reduce the switching losses; however, the quality of the currents is significantly compromised. In a further approach, an asymmetric SVM method for low $m_f$ is proposed. The method consists of adding two pulses during a switching period when the fundamental voltage crosses zero. A major disadvantage of this strategy is that, by adding pulses, the effective switching frequency is increased and, depending on the limitations of the power semiconductors, this may not be realisable in practice. As a final example, another approach uses a SVM strategy consisting of a variable sampling time. The aim is to synchronise the sampling period with the output pulse to reduce the switching timing error that occurs at low values of $m_f$. However, the complexity of this method is a major disadvantage for its implementation in practice.

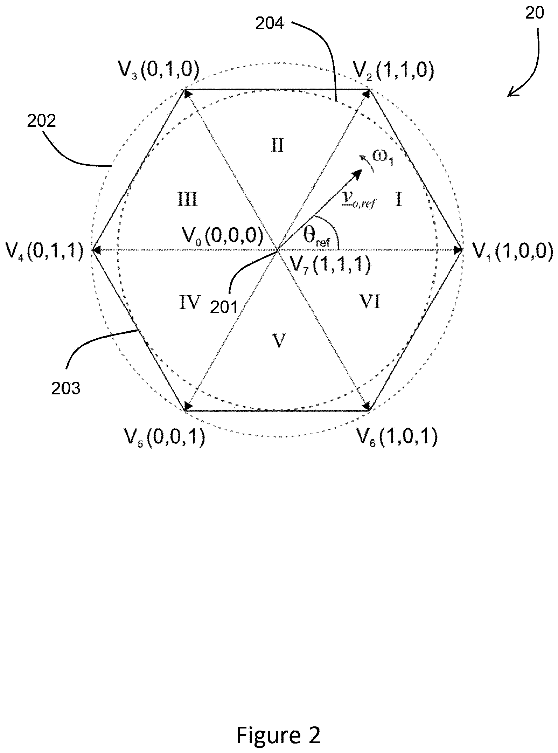

Figure 2 shows how the six active switching states of the VSI 10 may be illustrated or represented on a reference plane or polar coordinate plane 20 as six (active) vectors $V_1$-$V_6$. The active vectors are equally spaced about a pole 201 of the plane 20, i.e. they are equally spaced in a circle 202 with 60 degrees phase shift between respective pairs of the active vectors. The active vectors are a representation of the possible ON/OFF combinations of the pairs of inverter switches ($S_a$, $\overline{S_a}$), ($S_b$, $\overline{S_b}$), ($S_c$, $\overline{S_c}$), with 1 representing ON and 0 representing OFF. The zero switching states are also represented on the plane 20, in particular as the zero vectors $V_0$ and $V_7$ at the pole 201. This is summarised in Table 1 below.

Table 1

| | **Voltage vector** $V_i = [S_a\ S_b\ S_c]$ | |
|---|---|---|
| **Active vectors** | $V_1$ = [100] | $V_4$ = [011] |
| | $V_2$ = [110] | $V_5$ = [001] |
| | $V_3$ = [010] | $V_6$ = [101] |
| **Zero vectors** | $V_0$ = [000] | $V_7$ = [111] |

In SVM, a reference voltage vector $\underline{v}_{o,ref}$ is synthesised by switching between active and zero vectors, where $\underline{v}_{o,ref}$ is the desired voltage at the inverter output 102. The duty cycle of a switch is controlled such that a load sees a controllable average voltage. To achieve this, the switching frequency (i.e. repetition frequency for the SVM signal) is chosen to be sufficiently high such that the load cannot follow the individual switching events. In SVM, the switching frequency $f_s$ is considered to be high enough relative to the required output fundamental frequency to assume (with sufficiently low error) that the reference voltage is static during a switching period $T_s = 1/f_s$. Note that one rotation of the reference voltage vector $\underline{v}_{o,ref}$ about the pole 201 of the polar coordinate plane 20 corresponds to a fundamental frequency of the reference voltage.

The six active vectors $V_1$-$V_6$ define six sectors I - VI therebetween, the six sectors forming a hexagon 203. In SVM, to synthesise the reference voltage vector $\underline{v}_{o,ref}$ in a particular sector, a switching sequence using the two active vectors that define the particular sector, as well as one of the zero vectors, may be deployed. For instance, to synthesise the reference voltage vector $\underline{v}_{o,ref}$ in sector I, the two active vectors $V_1$ and $V_2$ and the zero vector $V_0$ may be used in a switching pattern.

The duty cycles for the two active vectors ($d_1$ and $d_2$) and the zero vector ($d_0$) are calculated according to:

$$d_1 = \frac{2}{\sqrt{3}} m_{SVM} \sin\left(\frac{\pi}{3} - \theta_{ref}\right)$$

$$d_2 = \frac{2}{\sqrt{3}} m_{SVM} \sin\left(\theta_{ref}\right)$$

$$d_0 = 1 - d_1 - d_2$$

where $m_{SVM}$ is a modulation index ( $0 \leq m_{SVM} \leq \sqrt{3}/2$ ) and $\theta_{ref}$ is the angle of the voltage reference vector $\underline{v}_{o,ref}$ related to a sector of the hexagon 203 ($0 \leq \theta_{ref} < \pi/3$).

The inverter peak output phase voltage is obtained with $m_{SVM} = \sqrt{3}/2$ , and will be $V_o = V_{DC}/\sqrt{3}$ , which is the maximum voltage that it is possible to generate with SVM operating in the linear region, where $V_{DC}$ is the DC supply voltage to the VSI. Note that $m_{SVM} = \sqrt{3}/2$ corresponds to the circle labelled 204, and inside the circle 204 ( $m_{SVM} < \sqrt{3}/2$ ) defines the linear modulation region.

If the tip of the reference vector $\underline{v}_{o,ref}$ lies outside the circle 204, then the modulation index will be greater than $\sqrt{3}/2$ . Such a situation is known as overmodulation and in that case an inconsistency may occur when using conventional equations for calculating duty cycles for the switching states ($d_1 + d_2 > 1 \Rightarrow d_0 < 0$). Therefore, a different strategy needs to be adopted.

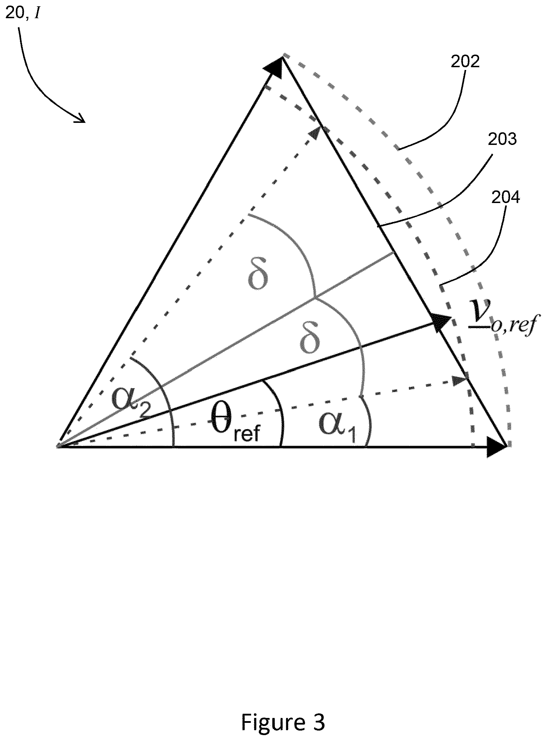

Referring to Figure 3, considering a voltage reference vector with $\sqrt{3}/2 < m_{SVM} < 1$ in sector I (as illustrated in Figure 2), it is noted that $d_0$ will only become negative if $\alpha_1 < \theta_{ref} < \alpha_2$. Then, a relatively simple method of overmodulation may be based on modifying the reference vector angle for duty cycle calculations in accordance with Table 2 below.

Table 2

| $\theta_{ref}$ range | Angle for duty cycle calculation |
|---|---|
| $\theta_{ref} \leq \alpha_1$ | $\theta_{ref}$ |
| $\alpha_1 < \theta_{ret} < \pi/6$ | $\alpha_1$ |
| $\pi/6 \leq \theta_{ref} < \alpha_2$ | $\alpha_2$ |
| $\theta_{ref} \geq \alpha_2$ | $\theta_{ref}$ |

Referring to Figure 3 and Table 2, when $\theta_{ref}$ is less than $\alpha_1$, SVM may be performed in a conventional manner. This is because the tip or head of the reference vector $\underline{v}_{o,ref}$ is inside the hexagon 203, and so $d_0$ will be greater than zero. When $\theta_{ref}$ is between $\alpha_1$ and $\pi/6$, the value of $d_0$ will be less than zero. To avoid this, SVM may be performed using $\alpha_1$ instead of $\theta_{ref}$. This will yield a $d_0$ of zero. When $\theta_{ref}$ is between $\pi/6$ and $\alpha_2$, again $d_0$ will be less than zero. To avoid this, SVM may be performed using $\alpha_2$ instead of $\theta_{ref}$. Once $\theta_{ref}$ is greater than $\alpha_2$, SVM may again be performed in a conventional manner with $\theta_{ref}$. The values of $\alpha_1$ and $\alpha_2$ may be determined by examining Figure 3, in particular the intersections between the hexagon 203 and the circle 204 in the sector under consideration (in this case, sector I). Specifically, the values of $\alpha_1$ and $\alpha_2$ may be determined according to:

$$\alpha_1 = \frac{\pi}{6} - \delta$$

$$\alpha_2 = \frac{\pi}{6} + \delta$$

with

$$\delta = \mathrm{acos}\left(\frac{V_{DC}/\sqrt{3}}{\hat{V}_{o,ref}}\right)$$

where $\hat{V}_{o,ref}$ is the peak phase voltage reference, with $0 \le \hat{V}_{o,ref} \le (2/3)V_{DC} \Rightarrow 0 \le \delta \le 30°$. This method of overmodulation does allow the modulation index to exceed $\sqrt{3}/2$, but it will produce voltages with higher harmonic distortion than conventional SVM.

It is noted that six-step modulation may be regarded as a particular case of SVM in which the reference voltage vector has a magnitude equal to the magnitude of the active vectors and therefore rotates along the circle 202. In six-step modulation, only the active vectors are used for the modulation, and they are applied sequentially from $V_1$ to $V_6$ according to the angular position of the reference voltage vector $\underline{v}_{o,ref}$, with the aim being to apply the active vector that is closest to the reference voltage vector $\underline{v}_{o,ref}$.

The present invention is advantageous in that it provides a method of modulating an output voltage of a voltage source inverter that has an inherent capability to operate in an overmodulation region. Unlike in previous approaches outlined above, the present invention is advantageous in that it does not need to change or switch from performing one modulation strategy in a linear modulation region of operation to a different modulation strategy in a nonlinear, overmodulation region of operation. The single modulation approach of the invention across different regions of operation does not need modification and is therefore relatively simple to implement and does not result in significant harmonic distortion in the output voltage.

The invention achieves these benefits via the provision of a modulation strategy that is capable of operating in the full voltage range that is possible with a two-level VSI. In particular, the invention provides a modulation strategy that is based on applying a fixed switching sequence in a fundamental period (i.e. a fundamental cycle of the reference or output voltage), but which also includes zero switching states so that the magnitude of the output voltage may be regulated (unlike six-step modulation, for instance).

As the strategy of the present invention is based on applying a fixed switching sequence in a fundamental period (unlike conventional SVM, for instance), then the invention is also advantageous in that it is capable of operation for any ratio of switching-to-fundamental frequency of the VSI. In particular, unlike conventional SVM, the present invention is capable of operating at low switching-to-fundamental frequency ratios (below a certain threshold, e.g. 15) without causing occurrences of the beat phenomenon (described above).

As described above, when the ratio between the switching and the fundamental frequencies is sufficiently large, it may be assumed that the reference voltage signal is constant at its initial value (i.e. when the reference voltage is sampled) during a switching period $T_s$. In particular, for sufficiently large values of this ratio, the initial value of the reference voltage is a sufficiently good approximation to its value across the entire interval. In that situation, the output pulses are considered to accurately reflect the components of the instantaneous voltage reference vector $\underline{v}_{o,ref}$. However, as the $m_f$ ratio becomes smaller, it no longer holds that the reference voltage vector is constant within a switching period, but it will rotate an angle $\Delta\theta = \omega_1 T_s$, where $\omega_1$ is the fundamental frequency in radians per second.

As mentioned above, the modulation strategy of the present invention is not affected by this frequency ratio as it is based on a fixed switching sequence similar to six-step modulation; however, it includes the application of zero vectors such that the voltage magnitude can be regulated.

In general terms, the modulation strategy of the present invention involves defining a modulation index on which the switching between different active and zero switching states may be based. The modulation index m may be defined according to:

$$m = \frac{\hat{V}_{ref}}{\frac{2}{\pi}V_{DC}}$$

where $\hat{V}_{ref}$ is the magnitude of a voltage reference vector and $(2/\pi)V_{DC}$ is the peak value of the maximum fundamental voltage that is possible to generate with a two-level VSI (such as the VSI 10).

With this definition, the maximum modulation index in the linear region of conventional SVM will be now $m = (V_{DC}/\sqrt{3})/((2/\pi)V_{DC})) = 0.907$ instead of $\sqrt{3}/2$. In six-step modulation, the equivalent modulation index would be m = 1, and each active voltage vector (illustrated in Figure 2) is applied for 60° of the fundamental cycle. Considering this, and if it is assumed that there is a linear relationship between the modulation index and the angle during which an active vector is applied, the following may be obtained:

$$\theta_{act} = m\frac{\pi}{3}$$

where $\theta_{act}$ is the active rotation angle (as will be described in greater detail below).

The difference with relative to $\pi/3$ will then be assigned to zero vectors according to:

$$\theta_{zero} = \frac{\pi}{3} - \theta_{act} = (1 - m)\frac{\pi}{3}$$

In this way, as zero vectors will be applied along with active vectors, the output voltage magnitude can be controlled, this being a noticeable difference compared to six-step modulation, for instance. For comparison, the switching sequence for six-step modulation and a switching sequence for the described modulation strategy of the present invention are presented in Table 3 below.

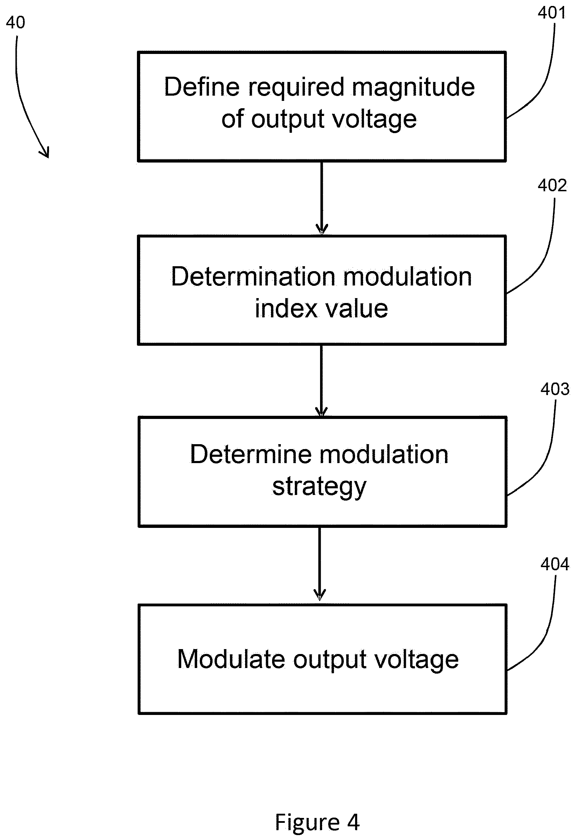

Figure 4 outlines the steps of a method 40 to be performed by the controller 14 for controlling the VSI 10 to modulate an output voltage of the VSI 10 in accordance with the present invention. The VSI 10 is a two-level, three-phase inverter. That is, the inverter has three phase legs each having a pair of inverter switches. The inverter switches are operable to provide six active switching states and two zero switching states $V_0$ and $V_7$ of the inverter 10.

| Six-step switching sequence |
|---|
| 100-110-010-011-001-101 |
| **Described switching sequence** |
| 000-100-110-111-110-010-000-010-011-111-011-001-000-001-101-000 |

<u>Table 3</u>

As mentioned, the modulation strategy of the present invention allows the output voltage magnitude to be controlled. At step 401 of the method 40, the required magnitude of the output voltage of the VSI 10 is defined, i.e. the magnitude of the voltage needed for the AC machine 12.

At step 402, the method 40 involves determining a modulation index value based on the required magnitude of the output voltage relative to a maximum output voltage magnitude of the VSI 10. This maximum voltage may be a peak value of a maximum fundamental voltage of the VSI 10. In particular, this modulation index value m may be obtained according to $\hat{V}_{ref}/(2/\pi)V_{DC}$, where $\hat{V}_{ref}$ is the magnitude of a voltage reference vector and $(2/\pi)V_{DC}$ is the peak value of the maximum fundamental voltage.

At step 403, the method 40 involves determining a modulation strategy for operating the VSI 10. The modulation strategy involves a defined switching sequence for switching between the different switching states of the VSI 10. As mentioned, the defined switching sequence includes at least one of the zero switching states, as well as the active switching states, so that the magnitude of the output voltage can be controlled. The defined switching sequence is a fixed switching sequence, meaning that a fixed switching pattern is performed across a fundamental cycle of the reference or output voltage.

The defined switching sequence may involve repeatedly switching from one of the zero switching states to one of the active switching states to a different one of the switching states. This pattern may be repeated a number of times during the fundamental cycle, where the particular zero switching state may change, and where one or both of the two active switching states may change, between different cycles through the pattern. All of the six active switching states may be applied during each complete fundamental cycle.

The defined switching sequence may alternatively involve switching between a zero switching state and an active switching state throughout the fundamental cycle of the output voltage.

In some examples, the switching pattern may be considered with reference to the polar coordinate plane (or reference plane) 20. In particular, the six active switching states are represented as respective active vectors $V_1$-$V_6$ equally spaced about the pole of the polar coordinate plane 20. A voltage reference vector is then represented in the polar coordinate plane 20 and defines an angle $\theta_{ref}$ indicative of a phase of the output voltage. The phase angle $\theta_{ref}$ refers to the angle of the reference vector relative to the active vector behind the phase angle $\theta_{ref}$, i.e. the angle of the reference vector in the particular sector I - VI in which it is located.

In an example in which the defined switching sequence involves repeatedly switching from one of the zero switching states to one of the active switching states to a different one of the switching states, the first of these active switching states may correspond to the active vector behind the reference vector (according to an anticlockwise direction of rotation of the reference vector about the plane 20), and the second of these active switching states may correspond to the active vector ahead of the reference vector. For instance, when the reference vector is in sector I, the switching sequence may involve switching from the zero vector $V_0$ to the active vector $V_1$ to the active vector $V_2$, and then to the zero vector $V_7$.

The defined switching sequence may involve operating the VSI 10 in each of the six active switching states twice during the fundamental cycle, i.e. during one complete rotation of the reference vector about the pole of the plane 20. For instance, the same active switching state may be operated before and after each instance of one of the zero switching states being applied.

In one specific example, the defined switching sequence (across a fundamental cycle) is the one outlined in Table 3 above. Note that this switching sequence may also be defined with reference to the reference plane as:

$V_0$ - $V_1$ - $V_2$ - $V_7$ - $V_2$ - $V_3$ - $V_0$ - $V_3$ - $V_4$ - $V_7$ - $V_4$ - $V_5$ - $V_0$ - $V_5$ - $V_6$ - $V_0$ - $V_6$ - $V_1$

where $V_0$, $V_7$ are the zero vectors and $V_1$ - $V_6$ are active vectors outlined in Table 1 above and illustrated in Figure 2.

Returning to step 403 in Figure 4, determining the modulation strategy also includes determining when to switch between the different (active and zero) switching states of the defined switching pattern. In particular, this determination is performed such that the output voltage synthesised by the VSI 10 is of the required magnitude (as defined in step 401). This determination may therefore be regarded as how long to spend in active states relative to zero states across a fundamental cycle so that an output voltage of the correct, required magnitude is obtained. As the modulation index value determined in step 402 is indicative of how much lower the required output voltage magnitude is relative to a maximum achievable magnitude, then the determination of step 403 of when to switch between states is based on the modulation index value.

In one example, the determination of when to switch between different switching states may be made with reference to rotation of the voltage reference vector about the reference plane 20. For instance, a linear relationship may be defined between the angle through which the reference vector rotates (which is determined from the voltage fundamental frequency) while an active vector is applied and the modulation index value. In particular, this 'active rotation angle' $\theta_{act}$ may be determined according to:

$$\theta_{act} = m \frac{\pi}{3}$$

That is, for each complete rotation of the reference vector, the VSI 10 is operated in each of the six active switching states for a total angle of rotation of the reference vector equal to $\theta_{act}$. It is noted that in the case m = 1, a six-step modulation strategy may be recovered, i.e. each of the six active switching states is applied for a sixth of a complete angle of rotation (60 degrees).

The angle through which the reference vector rotates while a zero vector is applied ('zero rotation angle' $\theta_{zero}$) may then be determined from the active rotation angle, for instance according to:

$$\theta_{zero} = \frac{\pi}{3} - \theta_{act} = (1 - m) \frac{\pi}{3}$$

Note that this value of $\theta_{zero}$ is the angle for which a zero switching state is applied in each sector (I - VI) of the reference plane 20. The total rotation angle of the reference vector in which a zero switching state is applied during a fundamental cycle is therefore $6\theta_{zero}$.

For the specific switching sequence outlined above in which each active vector is applied twice in a fundamental cycle with a zero vector being applied between each application of a respective one of the active vectors, each instance of an active vector being applied is for a reference rotation angle of $\theta_{act}/2$. Each instance of a zero vector being applied is for a reference rotation angle of $\theta_{zero}$. In one example, when an active vector is being applied, it is the active vector closest to the reference vector at a given time. The zero vectors may be applied as the reference vector moves from one sector of the reference plane 20 into the next.

The determination of when to switch between different switching states of the defined switching pattern may alternatively be made with reference to time (rather than the rotation angle of the reference vector as above). For instance, a linear relationship may be defined between the time the VSI 10 spends in an active switching state and the modulation index value. In particular, this 'active time period' $t_{act}$ may be determined according to:

$$t_{act} = \frac{m\pi}{3\omega_1}$$

where $\omega_1$ is a fundamental frequency of the reference or output voltage in radians per second. In a corresponding manner to above, this means that for each fundamental cycle the VSI 10 is operated in each of the six active switching states for a total time period equal to *tact.*

The time period in which a zero switching state is applied ('zero time period' $t_{zero}$) instead of a given one of the active states (so as to obtain the desired voltage magnitude) may then be determined according to:

$$t_{zero} = \frac{\pi(1-m)}{3\omega_1}$$

Note that the VSI 10 will be operated in a zero switching state for $6t_{zero}$ of a fundamental cycle.

Once the modulation strategy has been determined at step 403, then at step 404 of the method 40 the controller 14 is controlled to operate the VSI 10 in accordance with the determined modulation strategy in order to modulate the output voltage of the VSI 10 (to be provided to the AC machine 12).

As the described modulation strategy may be used irrespective of the ratio of switching-to-fundamental frequencies, then it may be implemented when the ratio is below a certain threshold (e.g. 15) where other, known modulation strategies result in disadvantageous effects (as outlined above). The present method may therefore involve determining the switching-to-fundamental frequency ratio in a particular case (or receiving an indication of the value of the ratio), and then implementing the steps 401-404 only if the ratio is below a prescribed threshold, e.g. 15.

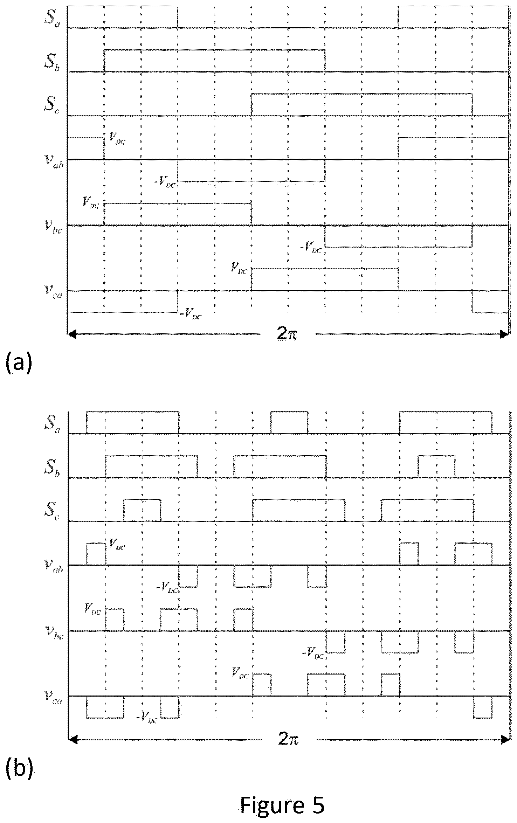

Figure 5 illustrates a comparison between the switching sequences of the known six-step modulation strategy (Figure 5(a)) and the specific described modulation strategy above (Figure 5(b)). As well as including zero switching states, Figure 5(b) shows that the switching state changes more frequently in the described approach compared with six-step modulation.

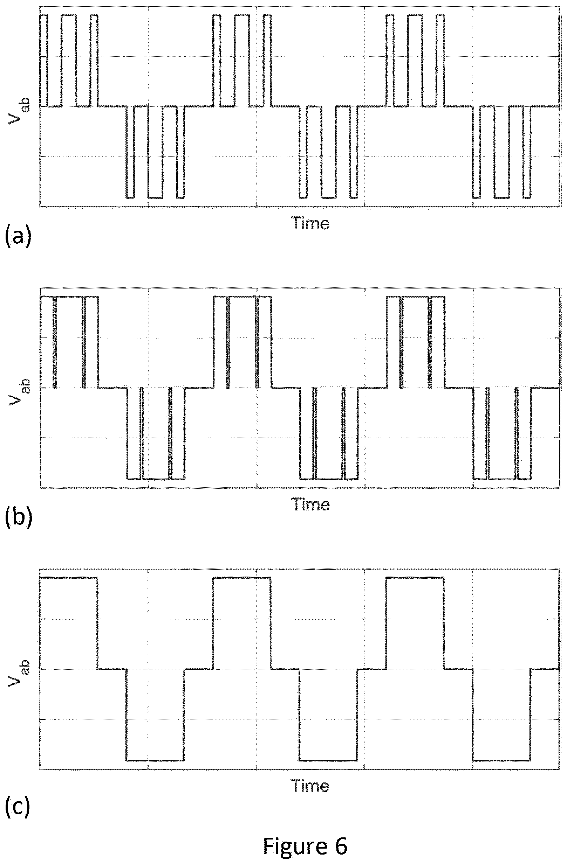

Figure 6 illustrates simulated voltage waveforms when the described modulation approach is implemented for different modulation indices. In particular, Figures 6(a), 6(b) and 6(c) illustrate waveforms when the modulation index value $m$ is 0.5, 0.98 and 1, respectively. As may be seen, the lower the modulation index, the narrower the pulses will be, with more time being assigned to zero vectors, thus reducing the fundamental output voltage magnitude.

Many modifications may be made to the described examples without departing from the scope of the appended claims.

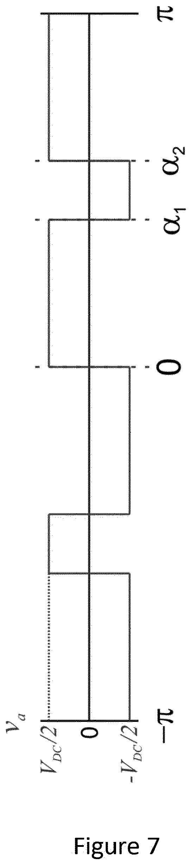

In the following, a harmonic analysis of the voltage generated according to the above-described method is presented. Figure 7 illustrates a plot of inverter output phase voltage against reference angle for the described method. Due to the odd symmetry of this waveform, the $a_n$ coefficients of the Fourier series will be zero. Moreover, the phase voltage may be defined mathematically in the interval $[0, \pi]$ as:

$$v_a(\theta) = \begin{cases} V_{DC}/2 & if \quad 0 \leq \theta < \alpha_1 \\ -V_{DC}/2 & if \quad \alpha_1 \leq \theta < \alpha_2 \\ V_{DC}/2 & if \quad \alpha_2 \leq \theta < \pi \end{cases}$$

and the $b_n$ coefficients may be given by:

$$b_n = \frac{2}{\pi} \int_0^\pi v_a(\theta) \sin n\theta \, d\theta$$

$$b_n = \frac{2}{\pi}\left\{\int_0^{\alpha_1} \frac{V_{DC}}{2}\sin n\theta \, d\theta - \int_{\alpha_1}^{\alpha_2} \frac{V_{DC}}{2}\sin n\theta \, d\theta + \int_{\alpha_2}^{\pi} \frac{V_{DC}}{2}\sin n\theta \, d\theta\right\}$$

Solving the integrals and evaluating gives:

$$b_n = \frac{V_{DC}}{n\pi}\{1 - 2\cos n\alpha_1 + 2\cos n\alpha_2 - \cos n\pi\}$$

The switching angles proposed are calculated considering the linear relationship between $\theta_{act}$ and m, and the following set of equations may be obtained:

$$\alpha_1 = \pi - \alpha_2$$

$$\alpha_2 - \alpha_1 = (1 - m)\frac{\pi}{3}$$

Solving the system gives:

$$\alpha_1 = (2 + m)\frac{\pi}{6}$$

$$\alpha_2 = (4 - m)\frac{\pi}{6}$$

Therefore, the Fourier series for the phase voltage is:

$$v_{phase}(t) = \frac{V_{DC}}{n\pi}\sum_{n=1,3,5,\dots}^{\infty}\left\{1 - 2\cos n(2 + m)\frac{\pi}{6} + 2\cos n(4 - m)\frac{\pi}{6} - \cos n\pi\right\}\sin n\omega t$$

and the fundamental phase output voltage is given by:

$$V_1 = \frac{2V_{DC}}{\pi}\{1 - \cos\alpha_1 + \cos\alpha_2\}$$

$$V_1 = \frac{2V_{DC}}{\pi}\left\{1 - \cos(2 + m)\frac{\pi}{6} + \cos(4 - m)\frac{\pi}{6}\right\}$$

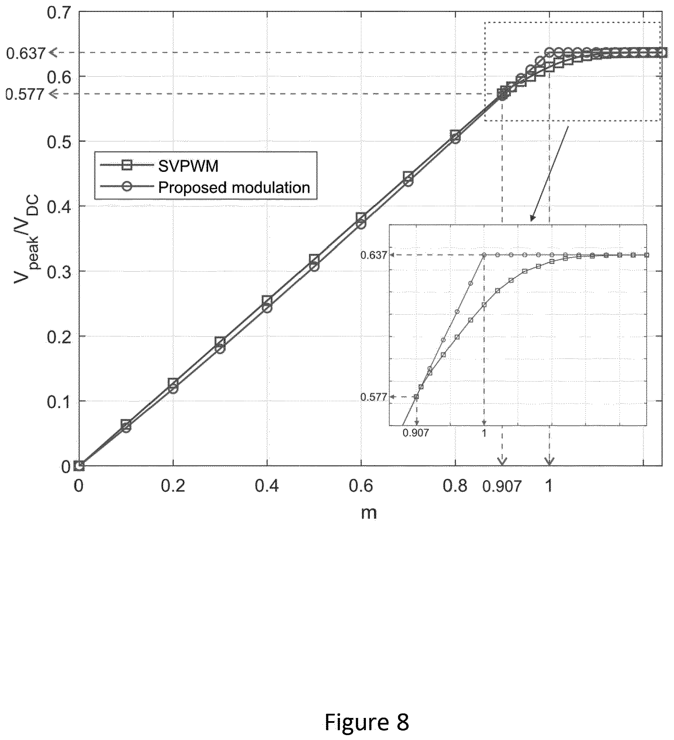

From the above, it is possible to plot the inverter voltage gain as a function of the modulation index for the described method. This is shown in Figure 8, and it is also compared with conventional Space Vector Pulse Width Modulation (SVPWM). As may be seen, the described strategy presents an almost linear voltage gain in the full modulation index range. This is a desirable feature from a control point of view, as for design of controllers, the inverter is typically modelled as a constant gain. However, this assumption is incorrect when using SVM in the overmodulation region, but is more appropriate for the described method.

The switching angles proposed in the described method are such that the phase voltage has full-wave and half-wave symmetry. If the switching angles are intended to be optimised to eliminate certain harmonics, then the half-wave symmetry will disappear, and as a consequence even harmonics could appear. Moreover, as only two angles may be adjusted ($\alpha_1$ and $\alpha_2$), there are only two degrees of freedom. However, if the magnitude of the fundamental voltage is required to be constant for a given modulation index, only one harmonic may be eliminated. For example, if the 5th harmonic is to be eliminated while keeping the fundamental voltage magnitude constant, the following system of nonlinear equations need to be solved:

$$1 - \cos 5\alpha_1 + \cos 5\alpha_2 = 0$$

$$1 - \cos \alpha_1 + \cos \alpha_2 = m$$

For a modulation index m = 0.5, the switching angles obtained are: $\alpha_1$ = 78.95° and $\alpha_2$ = 123.94°. It may be verified that even harmonics are now present in the voltage waveform:

$$b_2 = \frac{2V_{DC}}{2\pi}\{-\cos 2 \cdot 78.95° + \cos 2 \cdot 123.94°\} = 0.18V_{DC}$$

$$b_4 = \frac{2V_{DC}}{4\pi}\{-\cos 4 \cdot 78.95° + \cos 4 \cdot 123.94°\} = 0.23V_{DC}$$

The above-proposed switching angles are therefore the best option for the presented method, and there is no possibility to carry out selective harmonic elimination.

For the inverter output line-to-line voltage, the Fourier coefficients are given by:

$$b_n = \frac{4}{\pi}\left\{\int_{\alpha_1}^{\alpha_2} V_{DC} \sin n\theta \, d\theta + \int_{\alpha_3}^{\pi/2} V_{DC} \sin n\theta \, d\theta\right\}$$

$$b_n = \frac{4V_{DC}}{n\pi}\left\{\cos n\alpha_1 - \cos n\alpha_2 + \cos n\alpha_3 - \cos n\frac{\pi}{2}\right\}$$

The switching angles proposed are $\alpha_1$ = π/6, $\alpha_2$ = (1 + m)(π/6) and $\alpha_3$ = (3 - m)(π/6). Therefore, the Fourier series will be:

$$v_{line}(t) = \frac{4V_{DC}}{n\pi} \sum_{n=1,3,5,\ldots}^{\infty} \left\{\cos n\frac{\pi}{6} - \cos n(1+m)\frac{\pi}{6} + \cos n(3-m)\frac{\pi}{6}\right\} \sin n\omega t$$

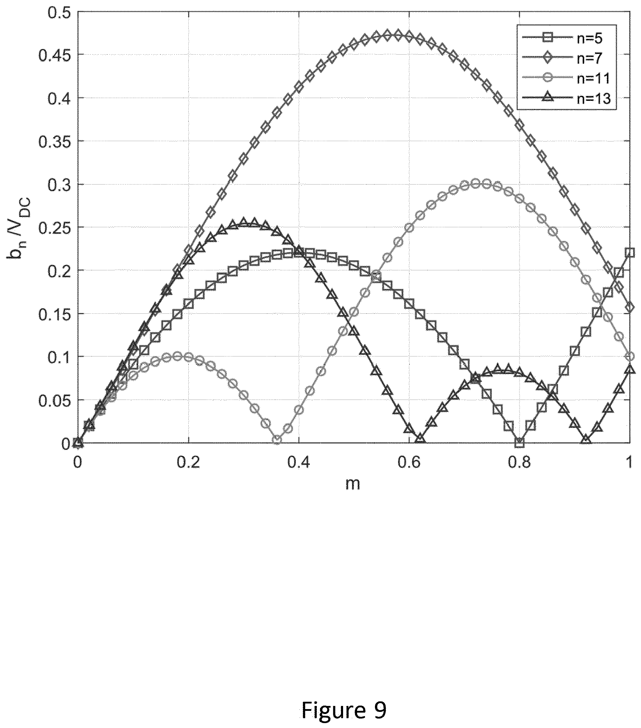

The most relevant harmonics present in the line-to-line voltage are the 5th, 7th, 11th and 13th, and are plotted as a function of the modulation index in Figure 9.

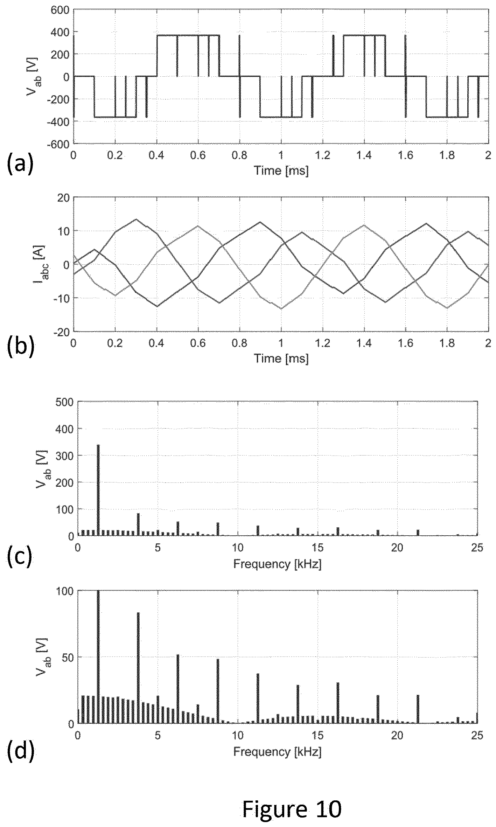

In the following, a simulation implementing the above-described modulation strategy is described. In particular, a simulated evaluation is carried out with a passive series resistive-inductive load with parameters $R$ = 0.9Ω and $L$ = 28.6$\mu$H. The DC voltage is 365V and the switching/sampling frequency is 10kHz. For a frequency ratio $m_f$ = 8 ($f_1$ = 1250$Hz$), with a modulation index $m$ = 0.98, Figure 10 shows the results obtained using the conventional overmodulation method described above. In particular, Figure 10(a) shows the line-to-line voltage, Figure 10(b) shows load currents, Figure 10(c) shows the voltage spectrum, and Figure 10(d) shows a zoomed view of Figure 10(c). As may be seen, there is an important imbalance in the currents, making this method unsuitable to be used when low switching-to-fundamental frequency ratio is required.

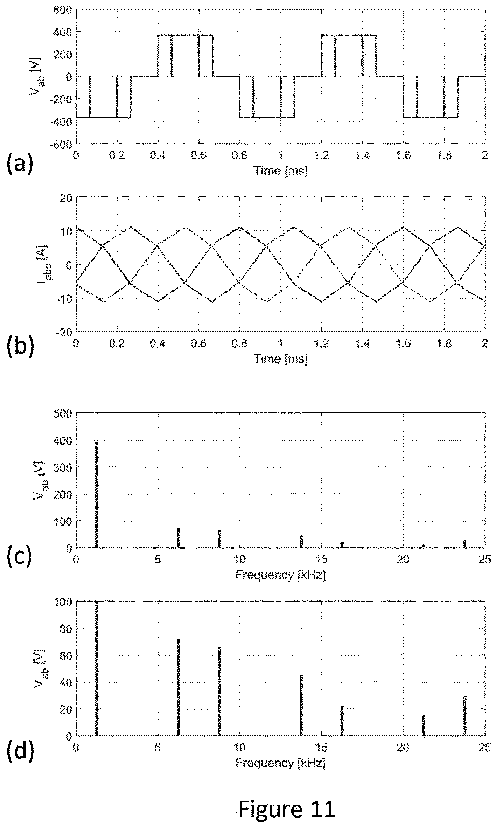

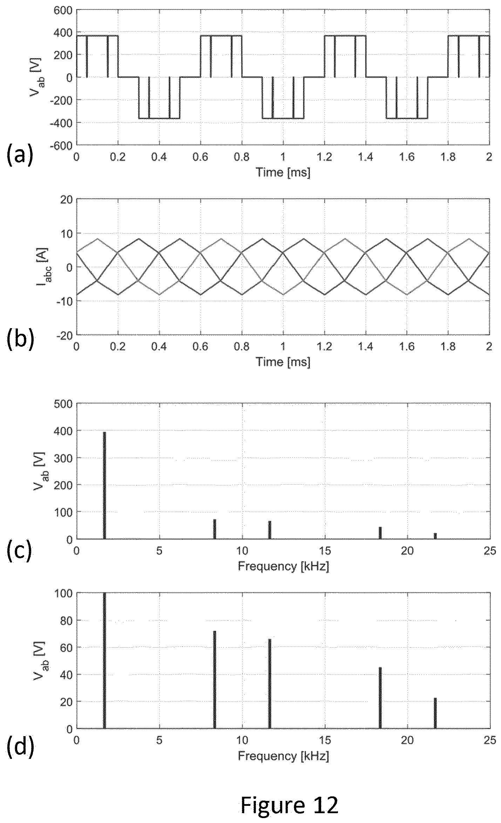

Corresponding results for the described modulation strategy for frequency ratios $m_f$ = 8 and $m_f$ = 6 and a modulation index of 0.98, are shown in Figures 11 and 12, respectively. Good performance and balanced currents may now be observed. Moreover, the voltage contains the harmonics indicated in the mathematical analysis outlined above.

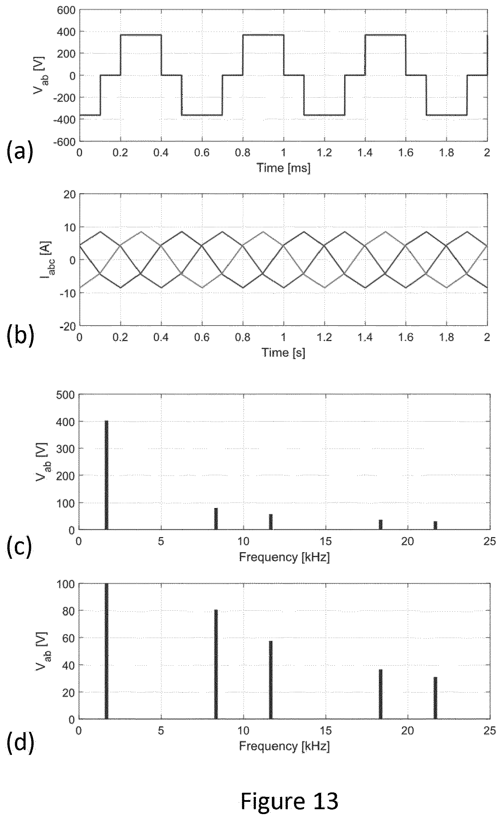

For comparison purposes, the results considering a modulation index $m$ = 1 that corresponds to conventional six-step modulation are shown in Figure 13 for $m_f$ = 6. As may be seen, the spectra of the voltage are similar to the those obtained in Figure 12.

Table 4

| Symbol | Description | Value |
|---|---|---|
| $P_m$ | Power | 0.6 kW |
| $\omega_{base}$ | Base speed | 1200 rpm |
| $I_s$ | Rated current | 6 A |
| $P$ | Poles | 8 |
| $R_s$ | Stator resistance | 0.94 $\Omega$ |
| $L_d$ | d-axis inductance | 4.5 mH |
| $L_q$ | q-axis inductance | 4.5 mH |
| $V_{DC}$ | DC supply voltage | 100 V |
| $f_s$ | Switching frequency | 500 Hz |

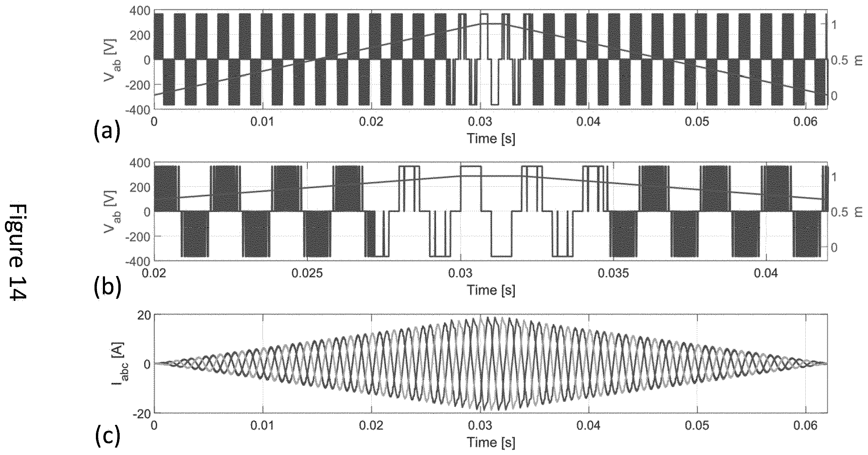

If the described modulation strategy is intended to be used only in the overmodulation range, then in the linear region, SVPWM may be the preferred alternative (provided that $m_f$ is sufficiently high). Therefore, a transition from SVPWM to the described method is shown in Figure 14. In particular, Figures 14(a) and 14(b), and 14(c) show the line-to-line voltage and modulation index, and Figure 14(c) shows the output currents. The fundamental frequency considered in this scenario is $f_1 = 1000Hz$ and the modulation index is varied from 0 to 1 and then from 1 to 0. As can be appreciated, smooth transitions between SVPWM and the proposed strategy are obtained in $t \approx 0.027s$ and $t \approx 0.034s$. This is further confirmed in the currents shown in Figure 14(c), where almost no impact is observed during the transition.

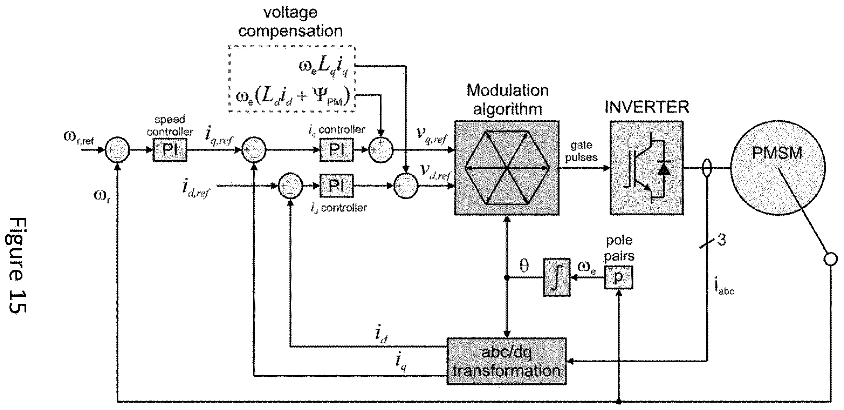

Finally, the described modulation strategy is validated via simulations applied to a permanent magnet synchronous machine (PMSM), with standard vector control scheme to regulate the currents. Maximum torque per ampere and feedforward flux weakening algorithms are also implemented. A diagram of the control scheme is shown in Figure 15, and the parameters are given in Table 4 above.

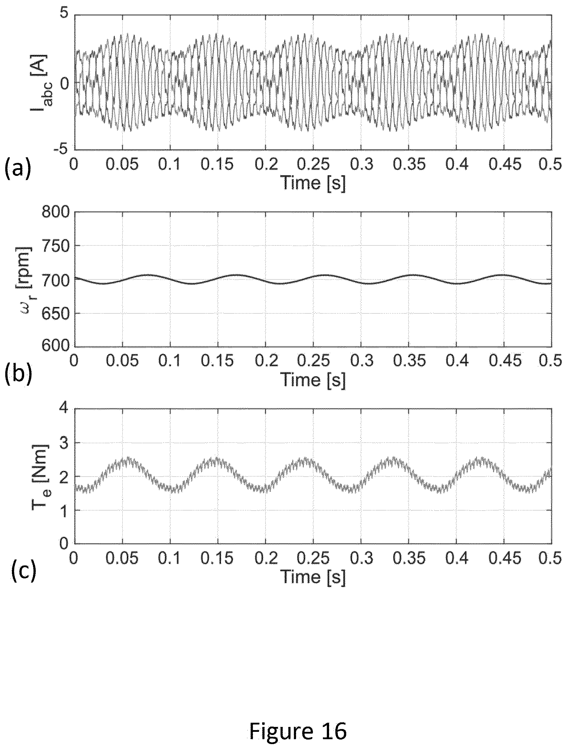

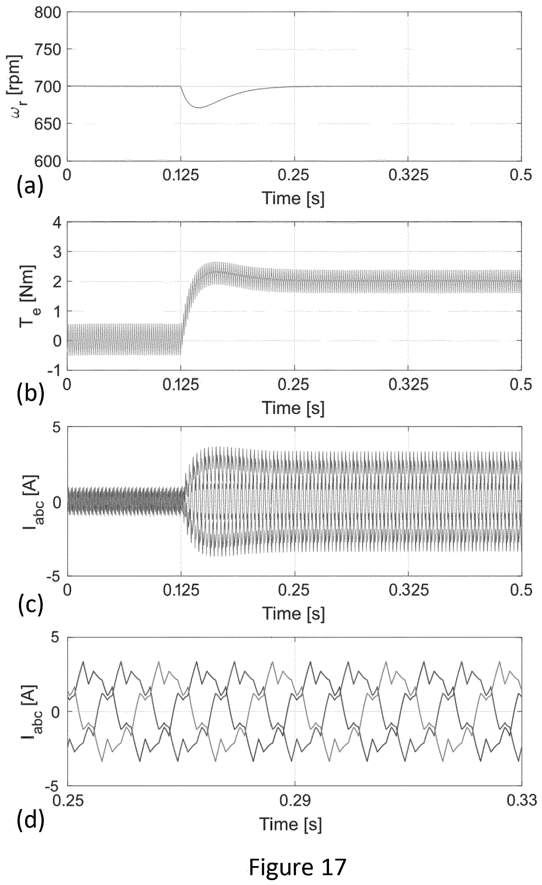

Figures 16 and 17 show the results for conventional SVM and the described modulation strategy, respectively. In particular, Figures 16 and 17 show the results at 700rpm ($m_f$ = 10.7). Figures 16(a), 16(b) and 16(c) show simulated phase current, speed, and torque, respectively. In Figure 16, the occurrence of the beat frequency phenomenon, which is described above, is evident, where the unwanted imbalance of the currents and large torque pulsations are produced. Figures 17(a)-17(d) show the speed, torque, machine current, and a zoomed view of machine torque, respectively. In Figure 17, it may be seen clearly that the effectiveness of the described method in avoiding the beat phenomenon in the machine drive. The speed and torque are correctly controlled, and the currents are balanced.

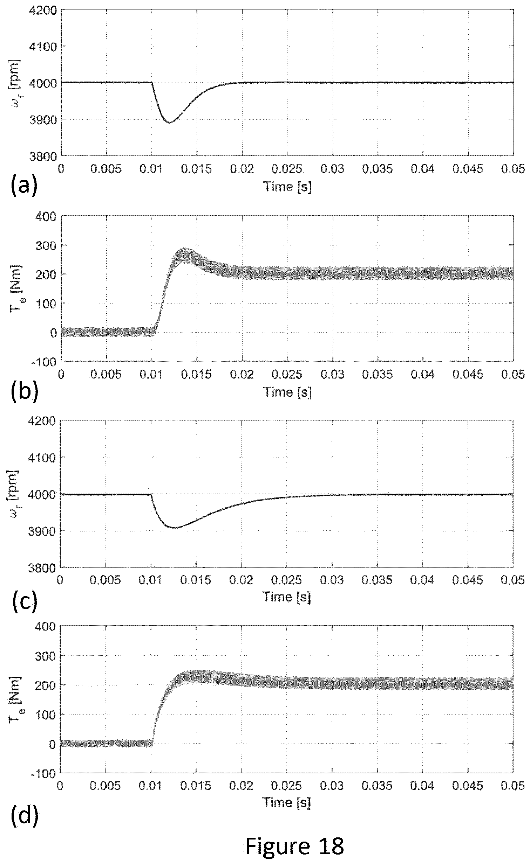

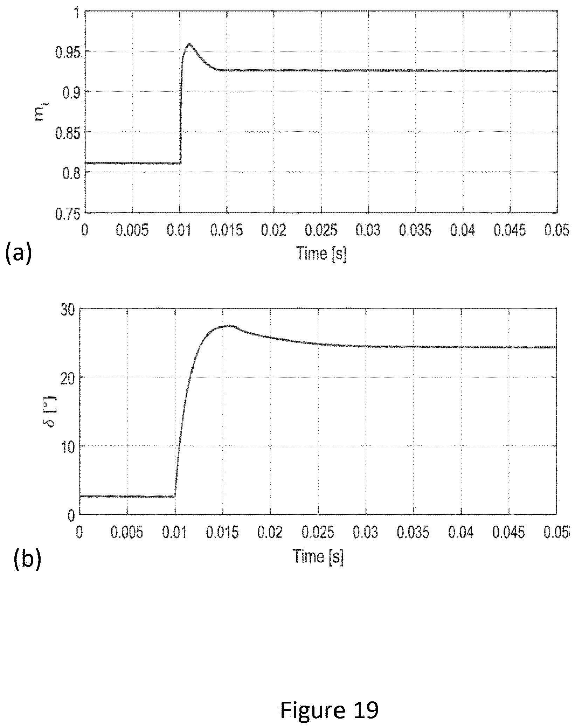

Results for a higher speed are shown in Figures 18 to 23. The machine is operated with the described modulation strategy and a frequency index $m_f$ = 6 (motor speed: $\omega_r$ = 4000rpm). The results obtained are compared with six-step modulation where voltage angle control is employed. The speed and torque for the described modulation strategy are shown in Figures 18(a) and 18(b), and the speed and torque for the conventional modulation strategy are shown in Figures 18(c) and 18(d). As may be seen, the torque ripple is similar for both modulation methods; however, with the described modulation strategy the transient response is faster than in the six-step modulation case. This is because of the fast action of the current vector control scheme that can be used along with the described method, as opposed to six-step modulation, where only the voltage angle (typically generated with a look-up table) can be controlled. Figures 19(a) and 19(b) show the modulation index for the described strategy, and the voltage angle for six-step operation, respectively.

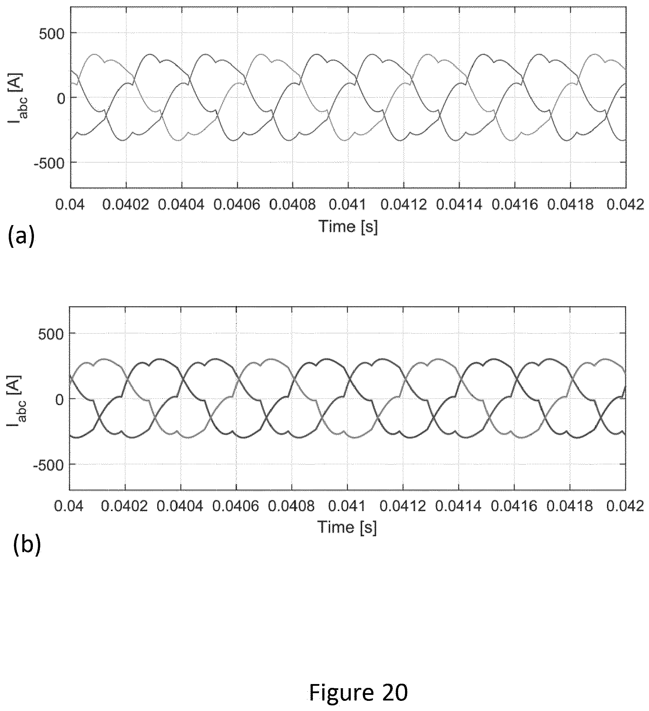

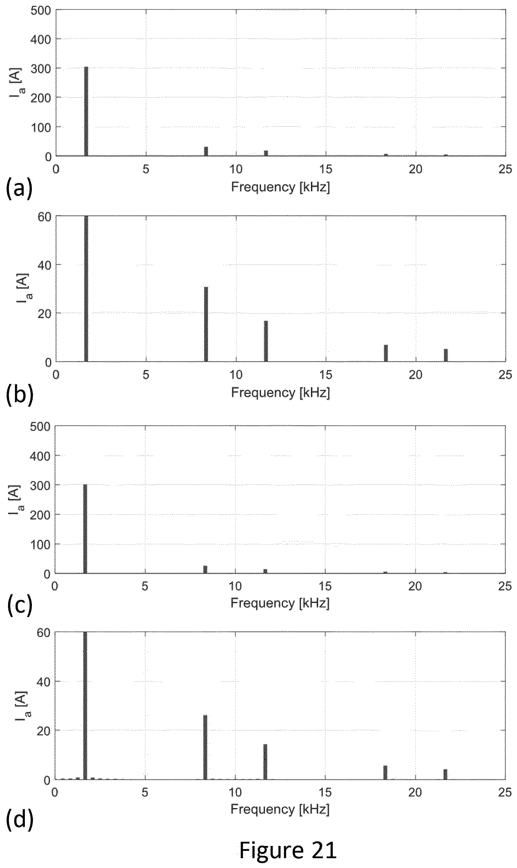

The machine currents for the described and six-step modulation strategies are shown in Figures 20(a) and 20(b), respectively. Their spectra are then presented in Figure 21. In particular, Figures 21(a) and 21(b) show standard and zoomed versions for the described method, and Figures 21(c) and 21(d) show standard and zoomed versions for the six-step method. Similar harmonic components may be observed in both cases.

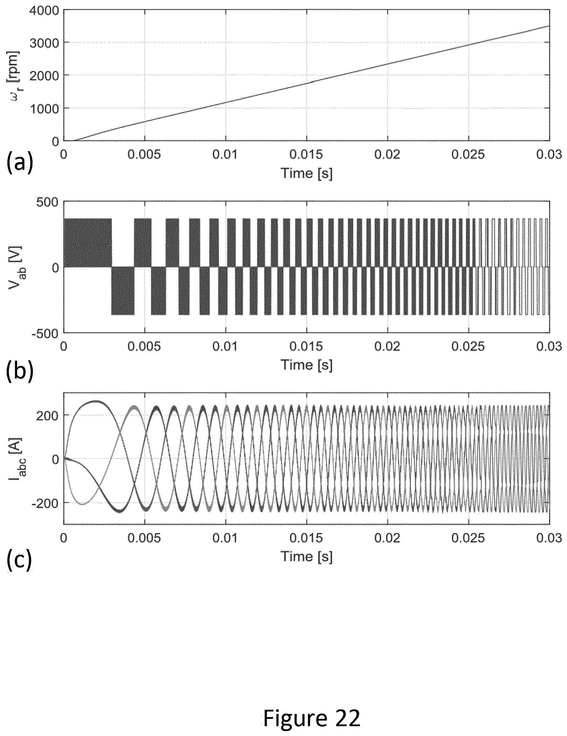

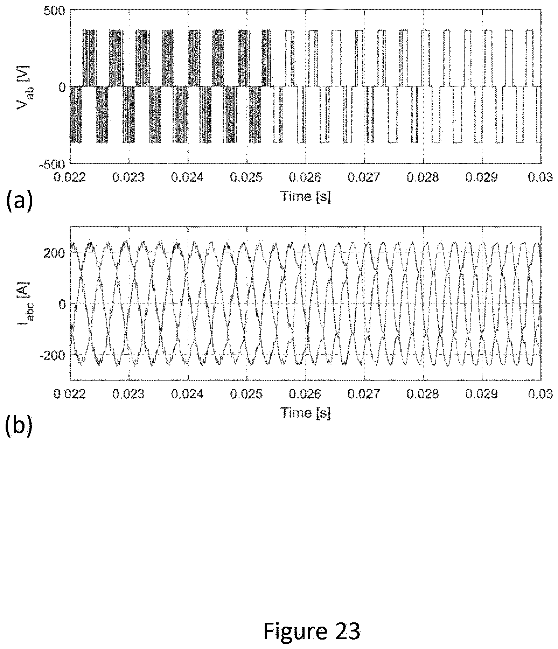

In a final simulation test, the described modulation strategy is used only in the overmodulation region whereas conventional SVM is used in the linear range. A transition from conventional SVM to the described modulation method is obtained applying a speed ramp from 0 to 3500 rpm, as shown in Figures 22 and 23. In particular, Figures 22(a), 22(b), and 22(c) show the speed, line-to-line voltage, and machine currents, respectively in a simulated transition from SVM to the described modulation strategy. The transition occurs at $t \approx 0.0255s$. The smoothness of the transition may be appreciated in Figure 23, where Figures 23(a) and 23(b) show zoomed views of Figures 22(b) and 22(c), respectively.

Experiments to validate the described modulation strategy may be carried out on a test rig based on a dSPACE platform. The experimental parameters are the same as those outlined in Table 4 above. The load torque is provided by a direct current generator coupled to the test machine and supplying a variable resistor. Hall-effect current sensors may be used to measure the inverter output phase currents. The resolution of the analog-to-digital converter (ADC) for sampling the currents is 16 bits. An incremental encoder of 1024 pulses per revolution is used to obtain the rotor position. The torque is measured with a MAGTROL torque transducer. The measured variables are acquired by the dSPACE hardware and software in a host computer, and may then be analysed and plotted in MATLAB.

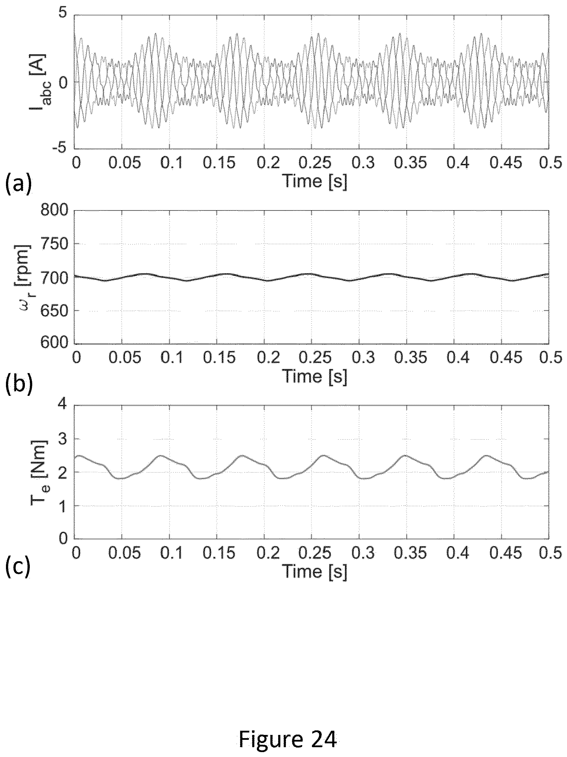

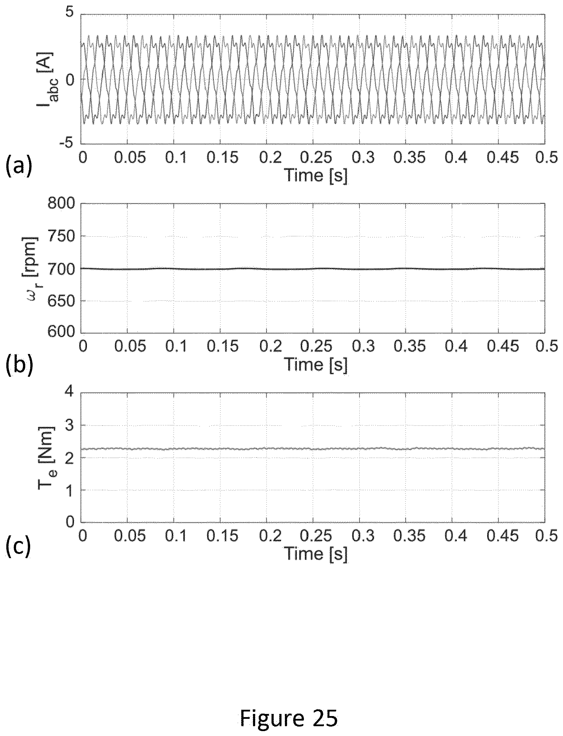

Figures 24 and 25 show results for the machine operating at 700rpm ($f_1$ = 46.67$Hz$) equivalent to a frequency ratio of $m_f$ = 10.7, for conventional SVPWM and the described modulation strategy, respectively. In particular, Figures 24(a) and 25(a) show the phase currents, Figures 24(b) and 25(b) show the speed, and Figures 24(c) and 25(c) show the torque. From Figure 24, it may be seen that for conventional SVPWM there is occurrence of the above-mentioned beat phenomenon, indicated by large pulsations of the machine currents (Figure 24(a)) and, consequently, large pulsations in the electromagnetic torque (Figure 24(c)). On the other hand, for the same operating conditions this issue may be addressed or solved when the described modulation strategy is used, as may be seen in Figure 25.

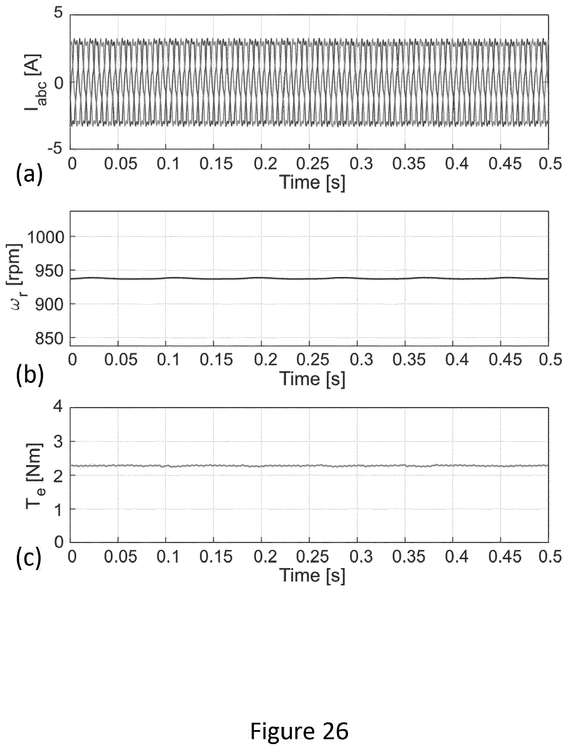

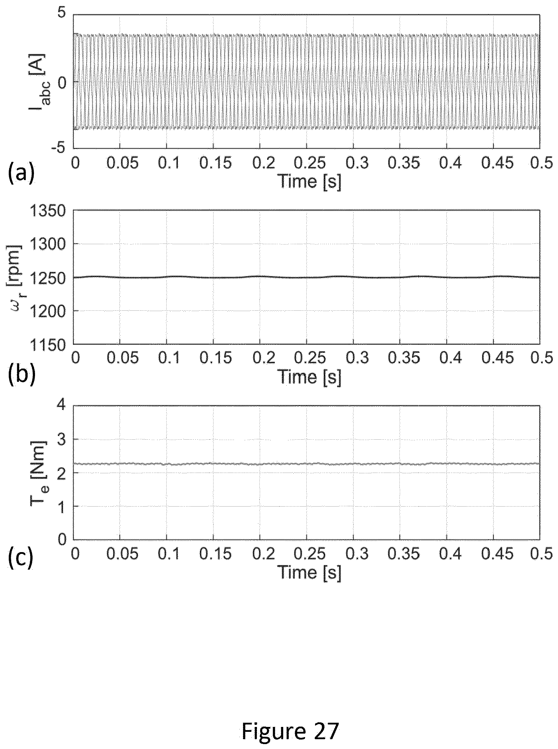

Further results for frequency ratios $m_f$ = 8 ($\omega_r$ = 937.5rpm) and $m_f$ = 6 ($\omega_r$ = 1250rpm) are presented in Figures 26 and 27, respectively. In particular, Figures 26(a) and 27(a) show the measured phase currents, Figures 27(a) and 27(b) show the speed, and Figures 26(c) and 27(c) show the torque, using the described modulation strategy.

**Claims**

1. A method of controlling a voltage source inverter (10) to modulate an output voltage of the inverter, the voltage source inverter comprising three phase legs (103a, 103b, 103c) each comprising a pair of inverter switches(($S_a, \overline{S_a}$), ($S_b, \overline{S_b}$), ($S_c, \overline{S_c}$)),, the inverter switches being operable to provide six active switching states and two zero switching states of the inverter,

   the six active switching states being represented as respective active vectors equally spaced about a pole of a polar coordinate plane (20), and a voltage reference vector being represented in the polar coordinate plane and defining an angle indicative of a phase of the output voltage,
   the method comprising:

   defining a required magnitude of the output voltage ($\hat{V}_{ref}$);
   determining a modulation index value ($m$) based on the required magnitude of the output voltage relative to a maximum output voltage magnitude of the voltage source inverter;
   determining a modulation strategy for operating the voltage source inverter, the modulation strategy defining a switching sequence for switching between the active and zero switching states of the inverter as the reference voltage vector rotates about the pole of the polar coordinate plane, and controlling the voltage source inverter in accordance with the modulation strategy to modulate the output voltage,

   wherein determining the modulation strategy comprises determining an active rotation angle of the reference voltage vector through which the voltage source inverter is operated in each of the active switching states during a fundamental cycle of the output voltage, the rotation angle being determined in dependence on the modulation index value.

2. A method according to Claim 1, wherein the maximum output voltage magnitude is a peak value of a maximum fundamental voltage of the voltage source inverter.

3. A method according to Claim 2, wherein the modulation index value $m$ is determined according to:

$$m = \frac{\hat{V}_{ref}}{\frac{2}{\pi} V_{DC}}$$

   where $\hat{V}_{ref}$ is the required magnitude of the output voltage, and $(2/\pi)V_{DC}$ is the peak value of the maximum fundamental voltage.

4. A method according to any previous claim, wherein the active rotation angle for operating the voltage source inverter in each of the active switching states is determined according to a linear relationship between the active rotation angle and the modulation index value.

5. A method according to Claim 4, wherein the active rotation angle $\theta_{act}$ is determined according to:

$$\theta_{act} = m \frac{\pi}{3}$$

where m is the modulation index value.

6. A method according to any previous claim, wherein determining the modulation strategy comprises determining a zero rotation angle of the reference voltage vector through which the voltage source inverter is operated in the zero switching states, the zero rotation angle being determined based on the active rotation angle.

7. A method according to Claim 6 when dependent on Claim 5, wherein the zero rotation angle $\theta_{zero}$ is determined according to:

$$\theta_{zero} = \frac{\pi}{3} - \theta_{act} = (1 - m)\frac{\pi}{3}$$

8. A method according to any previous claim, wherein the defined switching sequence comprises a repeated pattern of switching from one of the zero switching states to one of the active switching states to a further one of the active switching states.

9. A method according to Claim 8, wherein the further one of the active switching states corresponds to the active vector ahead of the active vector corresponding to said one of the zero switching states according to a direction of rotation of the reference voltage vector in the polar coordinate plane.

10. A method according to any previous claim, wherein the defined switching sequence comprises operating the voltage source inverter in each of the six active switching states twice during the fundamental cycle.

11. A method according to Claim 10, wherein the same active switching state is operated before and after each instance of the inverter being operated in one of the zero switching states.

12. A method according to Claim 10 or Claim 11, wherein, for each of the six active switching states, the method comprises operating the inverter in the respective active switching state for half of the active rotation angle for each of the two instances in which the active switching state is operated during the fundamental cycle.

13. A method according to any previous claim, wherein the defined switching sequence includes both of the two zero switching states.

14. A method according to any previous claim, wherein the defined switching sequence is:
$V_0$ - $V_1$ - $V_2$ - $V_7$ - $V_2$ - $V_3$ - $V_0$ - $V_3$ - $V_4$ - $V_7$ - $V_4$ - $V_5$ - $V_0$ - $V_5$ - $V_6$ - $V_0$ - $V_6$ - $V_1$
where $V_0$, $V_7$ are zero vectors of the polar coordinate plane, representing the zero switching states, and $V_1$ - $V_6$ are the active switching states.

15. A method according to any previous claim, wherein one rotation of the reference voltage vector about the pole of the polar coordinate plane corresponds to the fundamental frequency of the output voltage, and wherein the method is performed if a ratio between a switching frequency of the voltage source inverter and the fundamental frequency is below a prescribed threshold value.

16. A method of controlling a voltage source inverter to modulate an output voltage of the inverter, the voltage source inverter comprising three phase legs each comprising a pair of inverter switches, the inverter switches being operable to provide six active switching states and two zero switching states of the inverter,

the method comprising:

defining a required magnitude of the output voltage;
determining a modulation index value based on the required magnitude of the output voltage relative to a maximum output voltage magnitude of the voltage source inverter; and,
determining a modulation strategy for operating the voltage source inverter, the modulation strategy defining a switching sequence for switching between the active switching states and at least one of the zero switching states of the inverter during a fundamental cycle of the output voltage, and controlling the voltage source inverter in accordance with the modulation strategy to modulate the output voltage,

wherein determining the modulation strategy comprises determining an active time period for operating the voltage source inverter in each of the active switching states during the fundamental cycle, the active time period being determined in dependence on the modulation index value.

**17.** A method according to Claim 16, wherein the maximum output voltage magnitude is a peak value of a maximum fundamental voltage of the voltage source inverter.

**18.** A method according to Claim 17, wherein the modulation index value m is determined according to:

$$m = \frac{\hat{V}_{ref}}{\frac{2}{\pi}V_{DC}}$$

where $\hat{V}_{ref}$ is the required magnitude of the output voltage, and $(2/\pi)V_{DC}$ is the peak value of the maximum fundamental voltage.

**19.** A method according to any of Claims 16 to 18, wherein the active time period for operating the voltage source inverter in each of the active switching states is determined according to a linear relationship between the active time period and the modulation index value.

**20.** A method according to Claim 19, wherein the active time period $t_{act}$ is determined according to:

$$t_{act} = \frac{m\pi}{3\omega_1}$$

where $\omega_1$ is a fundamental frequency of the output voltage (rad/s), and m is the modulation index value.

**21.** A method according to any of Claims 16 to 20, wherein determining the modulation strategy comprises determining a zero time period for operating the voltage source inverter in the at least one zero switching state of the switching sequence, the zero time period being determined in dependence on the active time period.

**22.** A method according to Claim 21 when dependent on Claim 20, wherein the zero time period $t_{zero}$ is determined according to:

$$t_{zero} = \frac{\pi(1-m)}{3\omega_1}$$

**23.** A controller for controlling a voltage source inverter to perform a method according to any previous claim.

**24.** A non-transitory, computer-readable storage medium storing instructions thereon that when accessed by one or more processors cause the one or more processors to perform a method according to any of Claims 1 to 22.

Figure 1

Figure 2

Figure 3

40

Define required magnitude
of output voltage — 401

Determination modulation
index value — 402

Determine modulation
strategy — 403

Modulate output voltage — 404

Figure 4

(a)

(b)

Figure 5

(a)

(b)

(c)

Figure 6

Figure 7

Figure 8

Figure 9

Figure 10

Figure 11

Figure 12

Figure 13

Figure 14

Figure 15

Figure 16

Figure 17

Figure 18

(a)

(b)

Figure 19

(a)

(b)

Figure 20

Figure 21

Figure 22

Figure 23

(a)

(b)

(c)

Figure 24

(a)

(b)

(c)

Figure 25

Figure 26

Figure 27

| | Europäisches Patentamt<br>European Patent Office<br>Office européen des brevets | **EUROPEAN SEARCH REPORT** | **Application Number**<br>**EP 22 21 2033** |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| Y | DE 10 2017 204106 A1 (ZAHNRADFABRIK FRIEDRICHSHAFEN [DE])<br>13 September 2018 (2018-09-13)<br>* paragraphs [0034], [0042]; figures 1,5 * | 1-24 | INV.<br>H02P27/08 |
| Y | Bocker Joachim ET AL: "Elektrische Antriebe – Regelung Von Antriebssystemen",<br>,<br>1 January 2021 (2021-01-01), XP093039838,<br>Berlin, Heidelberg<br>DOI: 10.1007/978-3-662-62700-6<br>ISBN: 978-3-662-62699-3<br>Retrieved from the Internet:<br>URL:https://link.springer.com/book/10.1007/978-3-662-62700-6?source=shoppingads&locale=de&gclid=CjwKCAjw__ihBhADEiwAXEazJkZGn_O-9Wa_EPYZEcNRxQRKy22OzhpcRWQSb3rC_B5lRqCxeX9FZRoC4qwQAvD_BwE<br>[retrieved on 2023-04-18]<br>* figure 14.21 * | 1-24 | |
| A | PEREIRA N ET AL: "A simple and ultra-fast DSP-based space vector PWM algorithm and its implementation on a two-level inverter covering undermodulation and overmodulation",<br>IECON 2004 – 30TH ANNUAL CONFERENCE OF IEEE INDUSTRIAL ELECTRONICS SOCIETY (IEEE CAT. NO.04CH37609) 2004 IEEE PISCATAWAY, NJ, USA, PISCATAWAY, NJ : IEEE SERVICE CENTER, US,<br>vol. 2, 2 November 2004 (2004-11-02),<br>pages 1224-1229, XP010798977,<br>DOI: 10.1109/IECON.2004.1431750<br>ISBN: 978-0-7803-8730-0<br>* the whole document * | 1-24 | **TECHNICAL FIELDS<br>SEARCHED (IPC)**<br><br>H02P |

-/--

The present search report has been drawn up for all claims

| Place of search | Date of completion of the search | Examiner |
|---|---|---|
| Munich | 19 April 2023 | Schneider, Gernot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

Application Number

EP 22 21 2033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Modi Modi Manoj Manoj Kumar Kumar ET AL: "Space vector-based analysis of overmodulation in triangle-comparison based PWM for voltage source inverter", Sadhana (Bangalore), 1 June 2013 (2013-06-01), pages 331-358, XP093039651, India DOI: 10.1007/s12046-013-0149-x Retrieved from the Internet: URL:https://www.ias.ac.in/article/fulltext/sadh/038/03/0331-0358 [retrieved on 2023-04-17] * the whole document * ----- | 9-15 | |
| X | US 2011/221367 A1 (PERISIC MILUN [US] ET AL) 15 September 2011 (2011-09-15) * figure 8 * ----- | 1,16 | |
| X | US 10 734 935 B2 (GM GLOBAL TECH OPERATIONS LLC [US]) 4 August 2020 (2020-08-04) * figure 3 * ----- | 1,6 | TECHNICAL FIELDS SEARCHED (IPC) |
| X | US 2017/361732 A1 (GRUBIC STEFAN [US] ET AL) 21 December 2017 (2017-12-21) * figure 9 * ----- | 1,16 | |

The present search report has been drawn up for all claims

| Place of search | Date of completion of the search | Examiner |
|---|---|---|
| Munich | 19 April 2023 | Schneider, Gernot |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

page 2 of 2

## ANNEX TO THE EUROPEAN SEARCH REPORT
## ON EUROPEAN PATENT APPLICATION NO.

EP 22 21 2033

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | Publication date | Patent family member(s) | Publication date |
|---|---|---|---|
| DE 102017204106 A1 | 13-09-2018 | NONE | |
| US 2011221367 A1 | 15-09-2011 | CN 102195553 A<br>DE 102011004817 A1<br>US 2011221367 A1 | 21-09-2011<br>29-12-2011<br>15-09-2011 |
| US 10734935 B2 | 04-08-2020 | CN 109546920 A<br>DE 102018123235 A1<br>US 2019097562 A1 | 29-03-2019<br>28-03-2019<br>28-03-2019 |
| US 2017361732 A1 | 21-12-2017 | NONE | |

EPO FORM P0459

For more details about this annex : see Official Journal of the European Patent Office, No. 12/82